# EUROPEAN PATENT SPECIFICATION

(11) **EP 2 983 407 B1**
(45) Date of publication and mention of the grant of the patent: **16.08.2023**
(21) Application number: 14306250.3
(22) Date of filing: 07.08.2014
(51) Int. Cl.: H04W 36/00, H04W 76/19, H04W 92/20

(54) **Dual connectivity network**
Netzwerk mit dualer Konnektivität
Réseau de connectivité double

(43) Date of publication of application: 10.02.2016
(73) Proprietor: Alcatel Lucent, 91620 Nozay (FR)
(72) Inventor: Palat, Sudeep, Swindon, Wiltshire SN5 7DJ (GB); Worrall, Chandrika, Swindon, Wiltshire SN5 7DJ (GB); Godin, Philippe, 91620 Nozay (FR)
(74) Representative: Script IP Limited

(56) References cited:
- ALCATEL-LUCENT ET AL: "Re-establishment in Dual connectivity", 3GPP TSG-RAN WG2 MEETING #86; SEOUL, SOUTH KOREA; 19 - 23 MAY 2014, , vol. R2-142515, no. 86 10 May 2014 (2014-05-10), pages 1-2, XP002725472, Retrieved from the Internet: URL:http://www.3gpp.org/ftp/tsg_ran/WG2_RL 2/TSGR2_86/Docs/ [retrieved on 2014-06-05]
- ALCATEL-LUCENT ET AL: "Transfer and handling of SeNB configuration in MeNB", 3GPP DRAFT; R2-140710-SENB_CONFG, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20140210 - 20140214 9 February 2014 (2014-02-09), XP050792004, Retrieved from the Internet: URL:http://www.3gpp.org/ftp/Meetings_3GPP_ SYNC/RAN2/Docs/ [retrieved on 2014-02-09]
- ALCATEL-LUCENT ET AL: "SeNB configuration/reconfiguration and UE capability handling", 3GPP DRAFT; R2-134378 SMALL CELL UE CAPABILITY HANDLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. San Francisco, U.S.A.; 20131111 - 20131115 2 November 2013 (2013-11-02), XP050753460, Retrieved from the Internet: URL:http://www.3gpp.org/ftp/tsg_ran/WG2_RL 2/TSGR2_84/Docs/ [retrieved on 2013-11-02]

## Description

### FIELD OF THE INVENTION

Aspects and embodiments provide: a base station method, a user equipment method, a base station, a user equipment and computer program products operable to perform those methods.

### BACKGROUND

Wireless telecommunication systems are known. In such systems, network connectable devices known as user equipment (for example, mobile telephones or wireless devices such as iPads or other similar tablets) are operable to communicate with base stations provided by network providers.

In known wireless telecommunication systems, radio coverage is provided to network connectable devices within geographical areas, each known as a cell. A base station is located in each cell to provide radio coverage. Typically, network connectable devices in each cell are operable to receive information and data from a base station and to transmit information and data to a base station.

Network connectable devices roam through the wireless communication system. A number of base stations are typically provided and are distributed geographically in order to provide a wide area of coverage to network connectable devices.

If a network connectable device is within an area served by a base station, communications may be established between user equipment and the base station over associated radio links. Each base station typically supports a number of sectors or cells within the geographical area of radio coverage or service. Typically, a different antenna provided at a base station supports each associated sector or cell. Each base station often has multiple antennas.

Traditional base stations provide coverage in relatively large geographical areas and such cells are often referred to as macro cells.

In some cases, "dual connectivity" may be offered, such that a network connectable device is configured to allow communication with two base stations. Those two base stations may, for example, comprise two macro cell base stations or a macro cell base station and a small cell base station. A number of dual connectivity implementations may be configured and each may offer different benefits.

Although dual connectivity deployments may offer advantages, unexpected consequences of such deployments may occur. It is desired to address those consequences.

3GPP TSG-RAN WG2#85, 10 - 14 Feb 2014, R2-140710 item 7.2.2 Alcatel-Lucent, "Transfer and handling of SeNB configuration in MeNB" discloses an SeNB that sends its configuration to an MeNB which may inspect it and verify it before sending it to a dual connectivity UE. The transfer and handling of SeNB configuration may be performed in the MeNB with the SeNB configuration being handed in a transparent container to the UE.

3GPP TSG-RAN WG2#86, 19 - 23 May 2014, R2-142515 item 7.1.2 Alcatel-Lucent, "Re-establishment in Dual connectivity" discusses the re-establishment procedure for dual connectivity and notes that a UE might try to connect to a SeNB but that it would be unsuccessful. Addressing this by keeping the SeNB up to date with every MeNB reconfiguration would be possible, but perhaps not desirable.

### SUMMARY

A first aspect provides a method according to claim 1.

The first aspect recognises that one aspect of dual connectivity is that a network connectable device, such as user equipment, provided within the network can be connected to two base stations (eNB). Those two base stations may comprise a master base station (MeNB) and a secondary base station (SeNB). The user equipment may be connected to the master base station and secondary base station at a given time.

If operating in a configuration in which user equipment is connected to both an MeNB and an SeNB at the same time, typically the SeNB is responsible for configuring the radio resources associated with the SeNB. The SeNB is operable to provide the radio resource configuration to the MeNB in a suitable container. That configuration information is then typically passed on to the user equipment.

As mentioned previously, user equipment are typically free to roam within a wireless communication network and, as a result, to move between regions of coverage supported by different base stations. There is a need for a wireless communication network to support such user equipment mobility. Mobility of user equipment may need to be supported whilst the user equipment is in active communication with a network; for example, supporting a voice call. Such a transfer between regions of coverage may be known as a hand over. Similarly, as user equipment moves between coverage regions within a network, particularly when at a border between two cells, user equipment may suffer from radio link failure and it may be necessary for user equipment to re-establish a radio connection with a network. The first aspect recognises that there is a need to support the mobility of user equipment in a dual connectivity network.

In a typical handover scenario, there exists a serving or master base station and a target base station. User equipment may be primarily served by a master MeNB and would be being transferred into a coverage area of a target eNB. The first aspect recognises that during a typical handover, a target eNB may be operable to perform a configuration delta. The delta configuration comprises a configuration according to which a target eNB provides a delta in relation to a source configuration when sending configuration information to user equipment. That is to say, only the differences to a source configuration are provided to the user equipment. A full configuration is one in which user equipment operates to clear almost all of the source eNB configuration and applies a specified default configuration which forms the basis for subsequent reconfiguration by a target eNB. In particular, in a full configuration arrangement a target eNB may provide the difference between the default configuration and the desired configuration. Alternatively, in a non-claimed aspect a target eNB may be operable to provide a full configuration to user equipment, that full configuration comprising a full set of settings for the user equipment. If subject to a full reconfiguration, handover may operate such that the only configuration which is retained from a source eNB is the data radio bearer identifiers (DRBID).

If a handover is towards a target eNB which is of an earlier release than the source eNB, it is unlikely that the target eNB will be able to understand the configuration information provided to it by the source eNB. As a result, a target eNB may be unable to calculate a delta in order to perform reconfiguration and, thus, the target eNB is operable to perform a full configuration. That is to say, the user equipment and target eNB are operable such that all of the configuration from the source eNB is released and a default is applied. The default provides the base line for a delta configuration provided by the target eNB. In other words, the entire configuration (all radio bearers and all other control information) is provided as a delta from a default user equipment configuration.

The first aspect recognises that if user equipment is operating in a dual connectivity network, it may be communicating with both a master and secondary eNB. As a result, information regarding the configuration of the user equipment may include information relating to radio bearers supported by the master eNB and the secondary eNB.

The first aspect recognises that the handling of dual connectivity configuration information relating to the source eNB may not be supported by a target eNB and that the delta or full configuration options typically available within a network may not provide a suitable solution in relation to signalling support within a handover.

The first aspect further recognises that in the case of 1A dual connectivity architecture, there may be bearers served by the MeNB and bearers served by the SeNB. It will be appreciated that aspects and embodiments described may also be utilised in 3C dual connectivity architecture. The configuration of the various base stations within the network may be such that, during handover, the SeNB radio bearers and configuration are released. Similarly, aspects may be applied to scenarios in which SeNB bearers are moved to a MeNB or in which user equipment which has been operating in a dual connectivity network and then requests radio reestablishment.

The first aspect further recognises that a similar problem can exist in the case user equipment seeks radio re-establishment. Re-establishment may occur for a number of reasons, including: reconfiguration error, lower layer failure, handover failure or radio link failure and similar. During a re-establishment procedure, user equipment may be operable to perform re-establishment towards a master eNB or secondary eNB, or, of course, to any other eNB provided within a network. Re-establishment towards another eNB may only succeed if it has some indication of user equipment configuration, either as part of a handover preparation procedure or having received such user equipment configuration information as part of a context fetch. Typically in an LTE network operating to provide carrier aggregation (CA), the secondary cell is released as part of the re-establishment procedure. A similar mode of operation may be adopted for dual connectivity to release cells in the SeNB in the case of re-establishment. According to such an implementation, data radio bearers and their corresponding configuration in an SeNB will be released in the event of re-establishment. However, in order to minimise service interruption for a dual connectivity network operating in accordance with 1A architecture, the EPS bearers associated with the data radio bearers of the SeNB may not be released. Accordingly, a master eNB may then be operable to reconfigure those data radio bearers to form part of the master eNB configuration as part of the user equipment reconfiguration following re-establishment. However, since there is no configuration information of the bearer remaining at the user equipment it is impossible to perform a delta configuration for those bearers. As a result, configuration in the case of radio re-establishment may only be a delta or a full configuration and the first aspect recognises that existing techniques do not address the case where part of the configuration does not exist at the user equipment.

The first aspect further recognises that a similar problem can exist in the case that a radio bearer is transferred from a SeNB to a MeNB. Configuration information may be usefully known and calculations regarding configuration changes to be implemented at user equipment can be performed in relation to the configuration used in relation to the SeNB settings when making the transfer.

The first aspect recognises that there is a need to address handover and re-establishment in LTE networks offering dual connectivity. In particular, the first aspect recognises that it may not be possible to use delta configuration or full configuration in all scenarios and that an appropriate method to deal with handover and re-establishment must be implemented in a manner which does not cause poor performance within a network.

In one embodiment, a user equipment may be operating and performing dual connectivity communication with a master base station and a secondary base station. In one embodiment, a base station may retain configuration information for a radio resource control of a connection with the secondary base station. That configuration information relating to a radio resource control connection with the secondary base station may be utilised in response to a change to connection between the user equipment and the secondary base station.

In one embodiment, the change comprises: a handover of the user equipment from the master base station to another base station in a wireless communication network. In one embodiment, the change comprises: transfer of a connection with the secondary base station to the master base station. In one embodiment, the change comprises: a request for radio resource control connection re-establishment from the user equipment. Accordingly, it is recognised that in the case of dual connectivity architecture, there may be bearers served by the MeNB and bearers served by the SeNB. The configuration of the various base stations within the network may be such that, during handover, the SeNB radio bearers and configuration are released, and that information usually available regarding all active radio bearers serving user equipment may not be available. By maintaining information about connections between a secondary base station and user equipment, as well as radio resource connections between a master base station and user equipment. Changes to radio bearer configuration with a secondary base station may occur in various situations within a network, and the method of the first aspect may be applied in such situations as appropriate.

In one embodiment, the configuration information comprises: protocol layers configuration for the connection between the user equipment and the secondary base station. In one embodiment, the configuration information comprises: bearer configuration for a connection between the user equipment and the secondary base station. The configuration information may include common configuration information comprising a non-access side bearer mapping which maps EPS bearer IDs to data radio bearer identifiers and also include bearer and lower layer configurations for both the master eNB and secondary eNB.

In one embodiment, the bearer configuration information comprises one or more of: a Data Radio Bearer identifier; PDCP, RLC configuration, MAC configuration, physical layer configuration or Quality of Service information of a radio resource control connection between the user equipment and the secondary base station.

In one embodiment, retaining comprises: retaining the configuration information for a radio resource control of a connection with the secondary base station at the master base station as if it were configuration information for a radio resource control connection with the master base station. Accordingly, a master base station may "spoof' the configuration of radio bearers which were previously supported by a secondary base station in the event of a change to one or more of those radio bearers, such that it appears that those radio bearers were supported by the master base station.

The method comprises: calculating a change to the configuration information as a result of the change to the connection and informing the user equipment of the change to the configuration information. In one embodiment, the user equipment is informed of the change to the configuration information by means of a delta to at least one configuration setting. In a non-claimed alternative, the user equipment is informed of the change to the configuration information by means of a full configuration update to at least one configuration setting. In one example, the full configuration update comprises a delta to a default configuration setting or a null configuration setting. In some examples, the change may comprise a combination of a delta and full configuration in relation to one or more radio bearers. It will be appreciated that there are various options which may be used for the baseline for full configuration of the SeNB DRB bearers, namely: the default configuration of the user equipment or the configuration of physical layer of the master eNB, or a null configuration. Accordingly, if a base station does not have the configuration information it requires, it may be operable to request that information from the network or from another base station in the network.

A second aspect provides a computer program product operable, when executed on a computer, to perform the method steps of the first aspect.

A third aspect provides a master base station according to claim 7.

A fourth aspect provides a method in accordance with claim 8.

A fifth aspect provides a computer program product operable, when executed on a computer, to perform the method of the fourth aspect.

A sixth aspect provides a user equipment according to claim 9.

Further particular and preferred aspects are set out in the accompanying dependent claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates schematically radio protocol architecture for dual connectivity in an LTE network showing bearers being served by an MeNB and an SeNB;
Figure 2 illustrates schematically a model for user equipment stored configuration information in relation to dual connectivity, showing bearer and lower layer configurations held by the user equipment for MeNB and SeNB;
Figure 3 illustrates schematically handover in an LTE network in which dual connectivity is supported in source eNBs and handover occurs to a target eNB without dual connectivity;
Figure 4 is a signalling diagram illustrating possible handover signalling in a dual connectivity network; said signalling comprising a combination of a delta and full configuration;
Figure 5 illustrates schematically remaining user equipment configuration after deletion of an SeNB;
Figure 6 is a signalling diagram illustrating schematically handover messaging in a dual connectivity network in which the handover configuration comprises delta in both the MeNB and SeNB configuration;
Figure 7 is a signalling diagram illustrating schematically handover signalling according to which a source MeNB provides MeNB and SeNB bearer configuration, but is operable to pretend the bearers are all in the MeNB and no dual connectivity is provided;
Figure 8 is a signalling diagram illustrating signalling for re-establishment in an MeNB, in which user equipment is operable to release the SeNB configuration and the MeNB is operable to perform delta configuration for MeNB bearers and full configuration for SeNB bearers;
Figure 9 is a signalling diagram illustrating re-establishment in the MeNB, according to which the user equipment is operable to release the SeNB lower layer configuration but retain data radio bearer configuration information; and
Figure 10 is a signalling diagram illustrating schematically re-establishment procedures in a new eNB, according to which user equipment is operable to release SeNB configuration and user equipment is configured using a combination of delta configuration messaging for MeNB bearers and null configuration for SeNB bearers.

### DESCRIPTION OF THE EMBODIMENTS

Before discussing the embodiments in any more detail, first an overview will be provided.

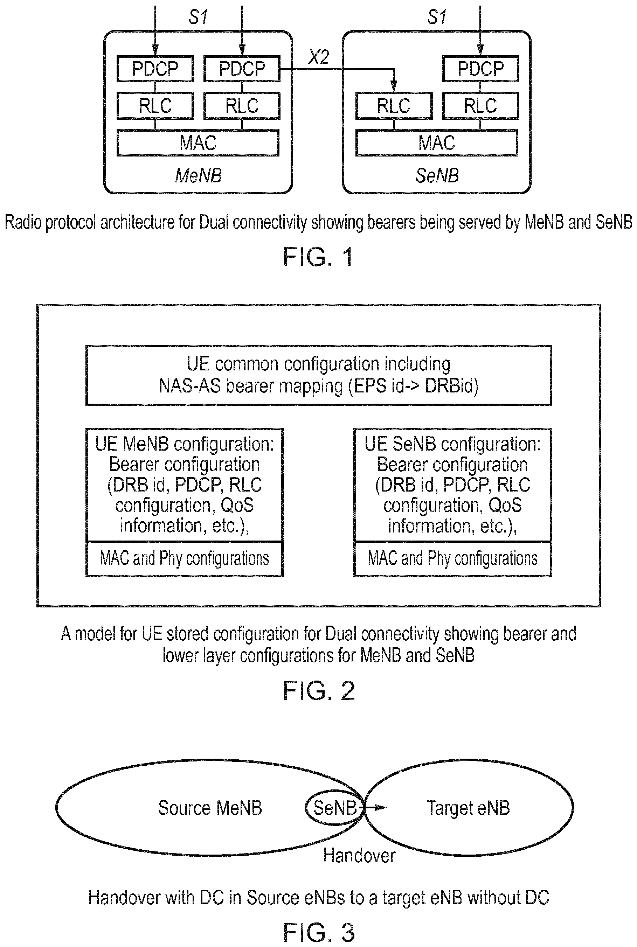

Figure 1 illustrates schematically radio protocol architecture for an LTE network in which dual connectivity is supported. In particular, Figure 1 illustrates a master eNB (MeNB) and secondary eNB (SeNB) and the bearers being served by that master eNB and secondary eNB. It can be seen that S1 signalling may provide configuration information to a base station and that configuration information maybe shared between the base stations by X2 signalling as appropriate.

Figure 2 illustrates schematically a model for user equipment stored configuration in relation to a dual connectivity arrangement. As can be seen in Figure 2, the user equipment retains configuration information for both a master eNB and secondary eNB. That configuration information includes common configuration information comprising a non-access side bearer mapping which maps EPS bearer IDs to data radio bearer identifiers and also includes bearer and lower layer configurations for both the master eNB and secondary eNB.

Figure 3 illustrates one scenario in which aspects and embodiments described herein may be of use. In particular, Figure 3 illustrates schematically handover from a dual connectivity source eNB to a target eNB operating without dual connectivity.

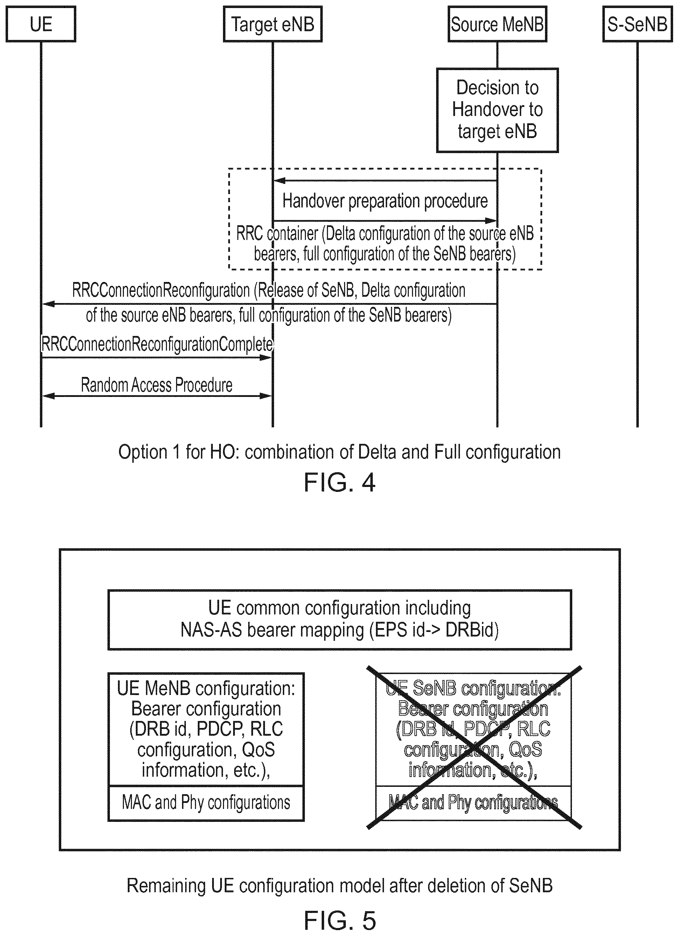

Arrangements may provide various solutions to address handover from a dual connectivity source eNB configuration to a target eNB without, for example, dual connectivity capability. Figure 4 illustrates schematically a first possible method according to which handover is supported by a combination of delta and full configuration messaging. According to the arrangement shown in Figure 4, a source master eNB may be operable to release the secondary eNB but the DRB identifiers and EPS identifiers may not be released. A combination of delta and full configuration is used for signalling to the user equipment by the source master eNB having been provided with suitable messaging by a target eNB. The target eNB is operable to use a delta configuration for the bearers supported by the master eNB and full configuration for bearers in the secondary eNB, identified by their DRB identifiers. Such an arrangement can be based on the bearer requirements that the previous source received via S1 signalling. It will be appreciated that there are various options which may be used for the baseline for full configuration of the SeNB DRB bearers, namely: the default configuration of the user equipment or the configuration of physical layer of the master eNB, or a null configuration.

Figure 5 illustrates schematically the remaining user equipment configuration model after deletion of a secondary eNB.

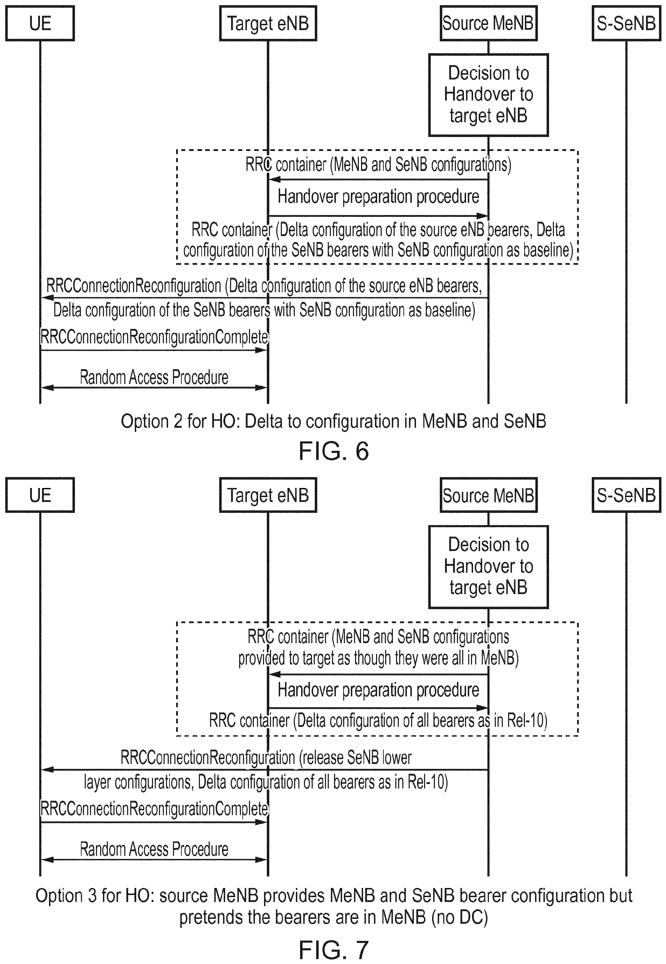

Figure 6 illustrates schematically an arrangement for handover according to which a target eNB is operable to signal user equipment using a delta configuration in both the master eNB and secondary eNB radio bearers. According to such an arrangement, a source eNB can provide both the master eNB and secondary eNB bearer configurations to the target eNB. The configuration of the bearers in the secondary eNB for architecture 1A may not be released by the source master eNB. The bearers in the master eNB and secondary eNB can be moved to the target eNB as part of the handover procedure and the secondary eNB can be released by the target eNB. The target eNB may then be operable to perform a delta configuration in relation to the radio bearers.

It will be appreciated that in relation to the arrangements described immediately above, a target eNB is capable of supporting handover from a dual connectivity connected user equipment. Such a scenario may not always be possible, and a target eNB may not be capable of understanding information relating to a SeNB.

Figure 7 illustrates schematically an alternative arrangement according to which a source master eNB is operable to provide master eNB and secondary eNB bearer configuration, but pretend that the bearers are all supported by the master eNB. According to such an arrangement, the secondary eNB configuration as used in dual connectivity can be used as a baseline, but a source master eNB is operable to manipulate that configuration such that it appears to a target eNB as though the data radio bearers are supported by the source master eNB (without dual connectivity configuration). The target eNB may be operable to provide user equipment with a delta configuration in which the master eNB and secondary eNB configurations are used as the baseline. The target eNB may be unaware that the data radio bearers were actually supported by a secondary eNB. Since the bearers are handed over to the target eNB it does not matter, from the target eNB perspective or from the user equipment perspective when it receives a handover command, that the bearers were actually supported by the secondary eNB. In providing the RRC configuration to the user equipment, the master eNB may request a release of the secondary eNB but not the bearer configurations.

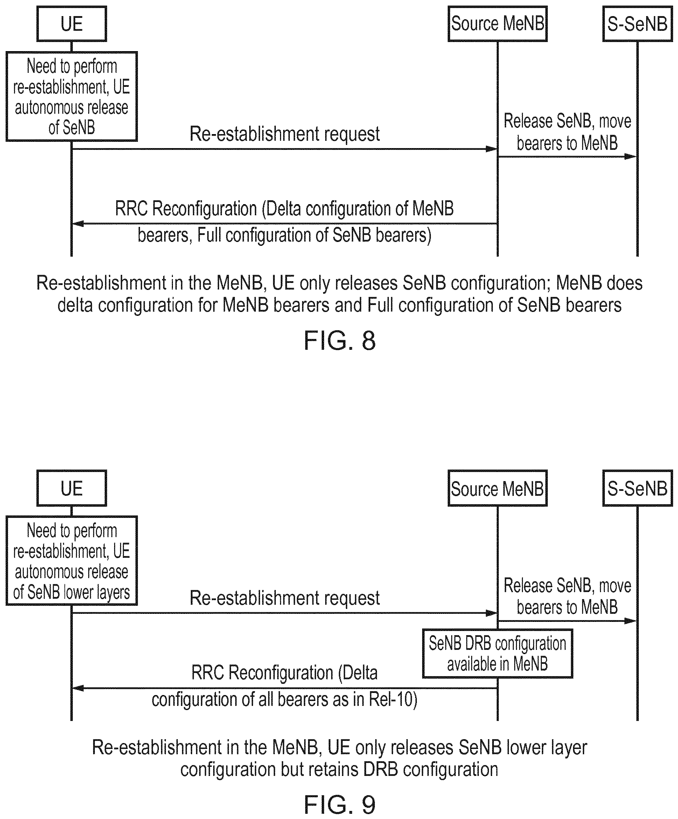

The arrangements described in relation to Figures 3 to 7 may also be used in relation to radio connection re-establishment in cases where user equipment is operating in a dual connectivity mode before re-establishment. In order to be used in such a scenario, some modification to the methods described previously may be required. In particular, during re-establishment, if the data radio bearers in the secondary eNB are released but not the EPS bearer or data radio bearer identifiers then the master eNB may be operable to perform a reconfiguration which is a mixture of delta and full configuration; that is to say, a delta configuration of the data radio bearers supported by the master eNB and full configuration of the bearers supported by the secondary eNB. The same options as described above conceptually may exist for the baseline of the delta configuration in relation to the full configuration of the bearers in the secondary eNB. Such an arrangement is illustrated schematically in Figure 8.

Figure 9 illustrates re-establishment in the master eNB according to which the user equipment only releases the secondary eNB lower layer configuration and retains the data radio bearer configuration. According to such an arrangement, user equipment may not release the data radio bearer configurations in the secondary eNB, even if the secondary eNB is conceptually released such that the master eNB is operable to perform a delta configuration of the bearers in the secondary eNB. In such a scenario the RRC re-configuration part of the re-establishment is the same as a normal delta configuration.

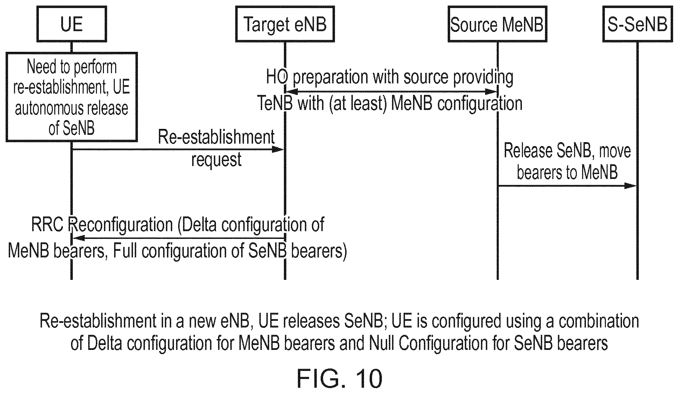

In cases where the re-establishment is towards another eNB (neither the master eNB nor secondary eNB in a dual connectivity arrangement which existed before re-establishment) the above-mentioned options for handover maybe applicable to the handover preparation phase. Such an arrangement is shown schematically in Figure 10.

It will be appreciated that aspects and embodiments described herein may provide a solution for reconfiguration of user equipment with dual connectivity during re-establishment or when it moves to another cell.

Existing solutions for support of mobility of user equipment with dual connectivity only comprise full configuration. Full configuration is very disruptive and is not a good mechanism for normal cell changes.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

## Claims

1. A method performed by a master base station of a user equipment operating in a dual connectivity network and configured to communicate with both said master base station and a secondary base station, the method comprising:
receiving configuration information for radio resource control of a connection between said user equipment and said secondary base station;
maintaining said configuration information for use in response to a change to said connection between said user equipment and said secondary base station;
calculating a change to said configuration information as a result of said change to said connection; and
informing said user equipment of said change to said configuration information.

2. The method according to claim 1, wherein said change to said connection comprises one of: a handover of said user equipment from said master base station to a target base station; a transfer of the connection with said secondary base station to said master base station; or a request for radio resource control connection re-establishment from said user equipment.

3. The method according to claim 1 or claim 2, wherein said configuration information comprises: bearer configuration information for the connection between said user equipment and said secondary base station.

4. The method according to claim 3, wherein said bearer configuration information comprises one or more of: a Data Radio Bearer identifier; PDCP, RLC configuration, MAC configuration, physical layer configuration or Quality of Service information of the connection between said user equipment and said secondary base station.

5. The method according to any preceding claim, wherein said receiving comprises receiving said configuration information directly from said secondary base station.

6. The method according to any preceding claim, wherein said user equipment is informed of said change to said configuration information by means of a delta configuration update to at least one configuration setting.

7. A master base station for a user equipment operating in a dual connectivity network and configured to communicate with both said master base station and a secondary base station, said master base station comprising logic operable:
to receive configuration information for radio resource control of a connection between said user equipment and said secondary base station;
to maintain said configuration information for use in response to a change to said connection between said user equipment and said secondary base station; and
to calculate a change to said configuration information as a result of said change to said connection, and to inform said user equipment of said change to said configuration information.

8. A method performed by a user equipment operating in a dual connectivity network and configured to communicate with both a master base station and a secondary base station, the method comprising:
implementing radio resource control of a connection between said user equipment and said secondary base station based on configuration information for radio resource control of the connection between said user equipment and said secondary base station; and
receiving from the master base station an indication of a change to said configuration information said change comprising a delta configuration update to at least one configuration setting.

9. A user equipment operating in a dual connectivity network and configured to communicate with both a master base station and a secondary base station, the user equipment comprising: dual connectivity logic operable to implement radio resource control of a connection between said user equipment and said secondary base station based on configuration information for radio resource control of the connection between said user equipment and said secondary base station; and
reception logic operable to receive from the master base station an indication of a change to said configuration information, said change comprising a delta configuration update to at least one configuration setting.

10. A computer program product operable, when executed on hardware of a master base station capable of executing software, to perform the method of any one of claims 1 to 6.

11. A computer program product operable, when executed on hardware of a user equipment capable of executing software, to perform the method of claim 8.

## Patentansprüche

1. Verfahren, das von einer Masterbasisstation einer Teilnehmereinrichtung durchgeführt wird, die in einem Netzwerk mit dualer Konnektivität betrieben wird und dazu ausgelegt ist, sowohl mit der Masterbasisstation als auch mit einer sekundären Basisstation zu kommunizieren, wobei das Verfahren Folgendes umfasst:
Empfangen von Auslegungsinformationen für eine Funkressourcensteuerung einer Verbindung zwischen der Teilnehmereinrichtung und der sekundären Basisstation;
Halten der Auslegungsinformationen zur Verwendung in Reaktion auf eine Änderung an der Verbindung zwischen der Teilnehmereinrichtung und der sekundären Basisstation;
Berechnen einer Änderung an den Auslegungsinformationen als Resultat der Änderung an der Verbindung; und
Informieren der Teilnehmereinrichtung über die Änderung an den Auslegungsinformationen.

2. Verfahren nach Anspruch 1, wobei die Änderung an der Verbindung eines von Folgendem umfasst: eine Übergabe der Teilnehmereinrichtung von der Masterbasisstation an eine Zielbasisstation, ein Transfer der Verbindung mit der sekundären Basisstation zur Masterbasisstation; oder eine Anforderung eines Verbindungsneuaufbaus für eine Funkressourcensteuerung von der Teilnehmereinrichtung.

3. Verfahren nach Anspruch 1 oder Anspruch 2, wobei die Auslegungsinformationen Folgendes umfassen: Trägerauslegungsinformationen für die Verbindung zwischen der Teilnehmereinrichtung und der sekundären Basisstation.

4. Verfahren nach Anspruch 3, wobei die Trägerauslegungsinformationen eines oder mehreres von Folgendem umfassen: eine Datenfunkträgerkennung; PDCP, RLC-Auslegung, MAC-Auslegung, physische Schichtauslegung oder Dienstqualitätsinformationen der Verbindung zwischen der Teilnehmereinrichtung und der sekundären Basisstation.

5. Verfahren nach einem der vorhergehenden Ansprüche, wobei das Empfangen das direkte Empfangen der Auslegungsinformationen von der sekundären Basisstation umfasst.

6. Verfahren nach einem der vorhergehenden Ansprüche, wobei die Teilnehmereinrichtung mittels einer Deltaauslegungaktualisierung mindestens einer Auslegungseinstellung über die Änderung an den Auslegungsinformationen informiert wird.

7. Masterbasisstation für eine Teilnehmereinrichtung, die in einem Netzwerk mit dualer Konnektivität betrieben wird und dazu ausgelegt ist, sowohl mit der Masterbasisstation als auch mit einer sekundären Basisstation zu kommunizieren, wobei die Masterbasisstation eine Logik umfasst, die zu Folgendem betreibbar ist:
Empfangen von Auslegungsinformationen für eine Funkressourcensteuerung einer Verbindung zwischen der Teilnehmereinrichtung und der sekundären Basisstation;
Halten der Auslegungsinformationen zur Verwendung in Reaktion auf eine Änderung an der Verbindung zwischen der Teilnehmereinrichtung und der sekundären Basisstation; und
Berechnen einer Änderung an den Auslegungsinformationen als Resultat der Änderung an der Verbindung und Informieren der Teilnehmereinrichtung über die Änderung an den Auslegungsinformationen.

8. Verfahren, das von einer Teilnehmereinrichtung durchgeführt wird, die in einem Netzwerk mit dualer Konnektivität betrieben wird und dazu ausgelegt ist, sowohl mit einer Masterbasisstation als auch mit einer sekundären Basisstation zu kommunizieren, wobei das Verfahren Folgendes umfasst:
Implementieren einer Funkressourcensteuerung einer Verbindung zwischen der Teilnehmereinrichtung und der sekundären Basisstation auf Basis von Auslegungsinformationen für eine Funkressourcensteuerung der Verbindung zwischen der Teilnehmereinrichtung und der sekundären Basisstation; und
Empfangen einer Anzeige einer Änderung an den Auslegungsinformationen von der Masterbasisstation, wobei die Änderung eine Deltaauslegungaktualisierung von mindestens einer Auslegungseinstellung umfasst.

9. Teilnehmereinrichtung, die in einem Netzwerk mit dualer Konnektivität betrieben wird und dazu ausgelegt ist, sowohl mit einer Masterbasisstation als auch mit einer sekundären Basisstation zu kommunizieren, wobei die Teilnehmereinrichtung Folgendes umfasst: eine duale Konnektivitätslogik, die betreibbar ist, eine Funkressourcensteuerung einer Verbindung zwischen der Teilnehmereinrichtung und der sekundären Basisstation auf Basis von Auslegungsinformationen für eine Funkressourcensteuerung der Verbindung zwischen der Teilnehmereinrichtung und der sekundären Basisstation zu implementieren; und
eine Empfangslogik, die betreibbar ist, eine Anzeige einer Änderung an den Auslegungsinformationen von der Masterbasisstation zu empfangen, wobei die Änderung eine Deltaauslegungaktualisierung von mindestens einer Auslegungseinstellung umfasst.

10. Computerprogrammprodukt, das, wenn es auf Hardware einer Masterbasisstation ausgeführt wird, die eine Software ausführen kann, betreibbar ist, das Verfahren nach einem der Ansprüche 1 bis 6 durchzuführen.

11. Computerprogrammprodukt, das, wenn es auf Hardware einer Teilnehmereinrichtung ausgeführt wird, die eine Software ausführen kann, betreibbar ist, das Verfahren nach Anspruch 8 durchzuführen.

## Revendications

1. Procédé réalisé par une station de base principale d'un équipement utilisateur fonctionnant dans un réseau à double connectivité et configuré pour communiquer à la fois avec ladite station de base principale et une station de base secondaire, le procédé comprenant :
la réception d'informations de configuration pour une commande de ressources radio d'une connexion entre ledit équipement utilisateur et ladite station de base secondaire ;
la conservation desdites informations de configuration pour les utiliser en réponse à un changement dans ladite connexion entre ledit équipement utilisateur et ladite station de base secondaire ;
le calcul d'un changement dans lesdites informations de configuration à la suite dudit changement dans ladite connexion ; et
l'information dudit équipement utilisateur dudit changement dans lesdites informations de configuration.

2. Procédé selon la revendication 1, dans lequel ledit changement dans ladite connexion comprend un parmi : un transfert intercellulaire dudit équipement utilisateur de ladite station de base principale à une station de base cible ; un transfert de la connexion avec ladite station de base secondaire vers ladite station de base principale ; ou une demande de l'établissement d'une connexion de commande de ressources radio à partir dudit équipement utilisateur.

3. Procédé selon la revendication 1 ou la revendication 2, dans lequel lesdites informations de configuration comprennent : des informations de configuration de support pour la connexion entre ledit équipement utilisateur et ladite station de base secondaire.

4. Procédé selon la revendication 3, dans lequel lesdites informations de configuration de support comprennent un ou plusieurs parmi : un identifiant de support radio de données ; une configuration PDCP, RLC, une configuration MAC, une configuration de couche physique ou des informations de qualité de service de la connexion entre ledit équipement utilisateur et ladite station de base secondaire.

5. Procédé selon l'une des revendications précédentes, dans lequel ladite réception comprend la réception desdites informations de configuration directement à partir de ladite station de base secondaire.

6. Procédé selon l'une des revendications précédentes, dans lequel ledit équipement utilisateur est informé dudit changement dans lesdites informations de configuration au moyen d'une mise à jour de configuration delta d'au moins un paramètre de configuration.

7. Station de base principale pour un équipement utilisateur fonctionnant dans un réseau à double connectivité et configuré pour communiquer à la fois avec ladite station de base principale et une station de base secondaire, ladite station de base principale comprenant une logique pouvant fonctionner :
pour recevoir des informations de configuration pour une commande de ressources radio d'une connexion entre ledit équipement utilisateur et ladite station de base secondaire ;
pour conserver lesdites informations de configuration pour les utiliser en réponse à un changement dans ladite connexion entre ledit équipement utilisateur et ladite station de base secondaire ; et
pour calculer un changement dans lesdites informations de configuration à la suite dudit changement dans ladite connexion, et pour informer ledit équipement utilisateur dudit changement dans lesdites informations de configuration.

8. Procédé réalisé par un équipement utilisateur fonctionnant dans un réseau à double connectivité et configuré pour communiquer à la fois avec une station de base principale et une station de base secondaire, le procédé comprenant :
la mise en oeuvre d'une commande de ressources radio d'une connexion entre ledit équipement utilisateur et ladite station de base secondaire sur la base d'informations de configuration pour une commande de ressources radio du connexion entre ledit équipement utilisateur et ladite station de base secondaire ; et
la réception de la station de base principale, d'une indication d'un changement dans lesdites informations de configuration, ledit changement comprenant une mise à jour de configuration delta d'au moins un paramètre de configuration.

9. Équipement utilisateur fonctionnant dans un réseau à double connectivité et configuré pour communiquer à la fois avec une station de base principale et une station de base secondaire, l'équipement utilisateur comprenant :
une logique de double connectivité pouvant fonctionner pour mettre en oeuvre une commande de ressources radio d'une connexion entre ledit équipement utilisateur et ladite station de base secondaire sur la base d'informations de configuration pour une commande de ressources radio du connexion entre ledit équipement utilisateur et ladite station de base secondaire ; et
une logique de réception pouvant fonctionner pour recevoir de la station de base principale une indication d'un changement dans lesdites informations de configuration, ledit changement comprenant une mise à jour de configuration delta d'au moins un paramètre de configuration.

10. Produit programme informatique pouvant fonctionner, lorsqu'il est exécuté sur le matériel d'une station de base principale en mesure d'exécuter un logiciel, pour réaliser le procédé selon l'une quelconque des revendications 1 à 6.

11. Produit programme informatique pouvant fonctionner, lorsqu'il est exécuté sur le matériel d'un équipement utilisateur en mesure d'exécuter un logiciel, pour réaliser le procédé selon la revendication 8.
